Europäisches Patentamt

European Patent Office

Office européen des brevets

(11) Publication number: **0 043 876**
**B1**

(12) **EUROPEAN PATENT SPECIFICATION**

(45) Date of publication of patent specification: **03.10.84**

(51) Int. Cl.³: **A 23 J 3/00**

(21) Application number: **80302346.4**

(22) Date of filing: **10.07.80**

(54) Method of preparing a meat snack analog.

(43) Date of publication of application:
**20.01.82 Bulletin 82/03**

(45) Publication of the grant of the patent:
**03.10.84 Bulletin 84/40**

(84) Designated Contracting States:
**AT BE CH DE FR GB IT LI LU NL SE**

(56) References cited:
**CA-A-1 028 552**
**FR-A-2 184 102**
**US-A-3 320 070**
**US-A-3 729 325**
**US-A-3 836 678**
**US-A-4 133 897**

(73) Proprietor: **GENERAL FOODS, LIMITED**
**2200 Yonge Street**
**Toronto Ontario M5W IJ6 (CA)**

(72) Inventor: **Millar, Donald B.**
**890 Mount Pleasant Road Apt.806**
**Toronto, Ontario (CA)**
Inventor: **Murray, E. Donald**
**833 Kilkenny Drive**
**Winnipeg, Manitoba R3T 4Y4 (CA)**
Inventor: **Maurice, Terrence J.**
**Box 302**
**Colborne Ontario (CA)**

(74) Representative: **Baillie, Iain Cameron et al**
**c/o Ladas & Parry Isartorplatz 5**
**D-8000 München 2 (DE)**

Courier Press, Leamington Spa, England.

**0 043 876**

**Description**

Technical field

The present invention is directed to a meatless food snack which simulates the taste, texture and other characteristics of dried meat snacks.

Background art

In prior art meat snacks, ground-up left-over meat from slaughterhouse operations, such as, beef or pork, is mixed, in desired proportions of lean and fat, with spices, preservatives and water binders, and continuously stuffed into suitable casings. The resulting material then is subjected to a smokehouse cycle to impart smokiness to the product and dry the same to the desired moisture level of about 12 to 20%. The product is then cut into the desired lengths for packaging, usually in an air tight foil package. These products are quite popular, have an acceptable nutritional value of about 25% by weight of meat protein, and have a long room temperature shelf-life.

The substitution of vegetable and other non-meat proteins for meat proteins in a number of meat products has been attempted, in view of the somewhat uneconomic and inefficient process whereby animals convert proteinaceous vegetable materials into meat, and other economic pressures, such as, limited grazing land for animals.

Consumer acceptance of meat-like products formulated from non-meat proteins is in large measure predicated on the extent of appearance, texture, taste and chewiness duplication of natural meat products and considerable difficulty often is experienced in meeting these requirements.

US—A—4133897 describes a sausage-like food product obtained by adding vegetable oil to a protein binder slurry, emulsifying the product, mixing this with textured vegetable protein and subsequently mixing the product thereof with vegetable oil and shaping it. The product obtained is of relatively high water content. The product of the present invention is of lower water content and is derived from a particular source of protein fibre.

As far as the applicants are aware, any prior attempts which may have been made to provide a consumer acceptable meatless snack food having the taste, texture and other characteristics of the prior art meat-based products mentioned above have not been successful.

Disclosure of invention

The present invention is directed to the provision of such meat snack analog based on non-meat proteins and which is room-temperature stable and has similar protein, moisture and fat contents to commercial meat snacks. In addition, the invention includes within its scope a product which simulates the polish sausage, produced by decreasing the preferred moisture content of the meat snack analog, and a sliced pepperoni analog, which is produced by slicing the meat snack analog.

The product of the present invention is preferably made from non-meat protein material, including texturing proteins, lipid material, water, and suitable spices, colorings and flavorings to simulate the taste and appearance of the meat-based products. The texturing proteins, which may be in the form of protein fibres and/or granules, impart a chewiness to the product which simulates meat-like characteristics.

The meat snack analog product of this invention is quite different from prior art sausage analog products which are intended to simulate hot dogs and the like. These prior art sausage analog products, such as are described in U.S. Patents Nos. 3,711,291, 3,713,837, 3,719,498, 3,719,499 and 3,836,678 assigned to General Foods Corporation, consist of gelled emulsions of protein in water from which fibrous material is substantially absent and have high moisture contents which necessitates refrigeration to prevent microbial spoilage. In contrast, the moisture content of the products of this invention permits room temperature storage without spoilage for long periods.

In the present invention, the component materials are brought together by a unique procedure which results in a thick paste-like material having texturing proteins distributed therethrough, which is stuffed into suitable casings and then subjected to the prior art smoking, drying, tempering, cutting and packaging operations.

According to the present invention there is provided a method for the formation of a proteinaceous snack product by stuffing a substantially uniform mix of protein, lipid material, water, spices, seasonings and flavourings into a suitable casing, drying the stuffed material to a desired moisture content sufficiently low to inhibit microbial growth at ambient temperature, and packaging the dried product in discrete lengths in moisture-proof packages, characterised by forming protein, lipid material and water into said substantially uniform mix by the steps of:

(a) emulsifying at least one food grade lipid material in water using at least one proteinaceous non-meat food emulsifier to form an emulsion,

(b) dispersing non-meat protein fibers derived from a protein micellar mass and constituting the sole proteinaceous texturing agent in an aqueous dispersion and/or solution of at least one non-meat proteinaceous binder to form a dispersion, and

2

(c) mixing the emulsion formed in step (a) with the dispersion formed in step (b) to form said substantially uniform mix,

the ingredients being used in proportions sufficient to provide a snack food product having the composition:

| Non-meat proteins | |
|---|---|
| — texturing protein | 10 to 70% by wt. |
| — binding and emulsifying protein | 5 to 65% by wt. |
| Water | 5 to 35% by wt. |
| Lipid material | 10 to 60% by wt. |
| Suitable spices, colouring agents and flavourings | up to 15% by wt. |

The lipid material, such as, a fat or oil, is emulsified in water with a proteinaceous food component emulsifier, the emulsion is blended with an aqueous dispersion of a protein binder and a fibrous protein, and the spices, colourings and flavourings are introduced at various stages, to result in the thick paste having the fibres substantially uniformly distributed therethrough.

In the product of the invention, protein is present from three non-meat protein sources, namely, the proteinaceous emulsifier, the proteinaceous binder and the fibrous protein, and has a considerable lipid content. The protein and lipid contents of the products may be varied widely and generally it is preferred to provide values which are similar to those of commercial meat snacks.

The following Table I sets forth the various essential and optional components which may be present in the final product and their relative proportions:

| Component | General range (% by wt.) | Preferred range (% by wt.) |
|---|---|---|
| Non-meat proteins | | |
| — texturing protein | about 10 to about 70 | about 30 to about 50 |
| — binding and emulsifying proteins | about 5 to about 65 | about 10 to about 30 |
| Water | about 5 to about 35 | about 15 to about 25 |
| Lipid material | about 10 to about 60 | about 25 to about 35 |
| Suitable spices, colouring agents and flavourings | up to about 15 | about 5 to about 10 |
| Antioxidant | up to about 1 | about 0.8 |
| Salt | 0 to about 10 | about 5 to about 6 |
| Sugars | 0 to about 35 | about 2 to about 4 |
| Preservatives— potassium sorbate | 0 to about 0.2 | about 0.1 |
| sodium nitrite | 0 to about 0.02 | about 0.02 |
| Antifoam agent | 0 to about 0.5 | about 0.01 |
| Acidifying agent and/or bacterial culture | 0 to about 5 | 0 to about 0.1 |

The formation of the emulsified lipid material may be effected by mixing, usually under high shear, the lipid material which is preferably a liquid food grade vegetable oil or similar plant source material,

3

# 0 043 876

although an animal fat may be used, if desired, and in which paste and liquid flavourings first may be dissolved and/or dispersed, with a dispersion or solution of a proteinaceous food emulsifier in water, which may have colouring agents and/or flavouring dissolved and/or dispersed therein. Salt may be dry mixed with dry protein emulsifier prior to dispersion of the latter in water. An emulsion stabilizing agent also may be included in the dry mix, if desired.

The dispersed mixture of fibrous protein in aqueous protein binder phase may be formed by mixing a dry protein binder with water to rehydrate and disperse and/or dissolve the same and then dispersing the fibrous protein obtained from a micellar mass in the aqueous medium under low shear conditions to minimize breakage of the fibrous protein. Fibrous proteins of various dispersions may be employed, generally of length of about 1 to about 15 cm, preferably about 1 to about 4 cm, and of diameter of about 0.1 to about 1 mm.

Powdered meat flavourings preferably are dry mixed with the dry protein binder prior to dispersing the latter in water. A food grade antifoam agent also may be added to the dry mixture, if desired. Colouring agents and/or flavourings may be added to the water prior to mixing with the dry protein.

The dispersed mixture of fibrous protein then is blended into the emulsion under low shear conditions and supplemental lipid material may be added to the blend, if desired. The emulsion may be blended directly with the dispersed mixture, or at least part of the emulsion first may be heat set to a gelatinous form to produce a simulated animal fat product, which then may be ground to particulate form, generally of an average size from about 0.1 to about 5 mm, prior to mixing of the ground material with the dispersed mixture of fibrous protein. Any portion of the emulsion not so heat set is used directly in the bleaching step.

It has been found that the oil-release characteristics of the final product may be varied depending on the relative proportions of the emulsion used directly and the heat set emulsion used, varying from a maximum oil-release value when all the emulsion is used directly to a minimum oil release value when all the emulsion is first heat set. The oil release and mouth feel characteristics of the product may also be modified by variations in additional quantities of supplemental lipid material added to the blend.

Once the blend has been formed any preservatives, sugar, acidifying agent and/or bacterial culture, any remaining salt, flavours and spices may be added. The resulting thick paste-like mix of fibrous particles generally has a moisture content of about 30 to about 70% by weight, preferably about 40 to about 60% by weight, these moisture-content values being typical of the commercial meat-based mixes used to form commercial meat snack products. This being the case, the prior art operations may be used thereon. The thick paste-like mix is fed to a sausage skin stuffer and the additional processing steps are effected to form a packaged product.

The preservatives may be conventional protein preservatives, such as, potassium sorbate and sodium nitrite. It is one feature of this invention that, surprisingly, sodium nitrite may be omitted from the added preservatives.

The fibrous protein used in this invention is preferably that described in our copending Canadian application Serial No. 296,430 filed February 3, 1978. Such fibrous protein is formed by heat coagulation of a protein micellar mass, preferably by injection into hot water.

Protein micellar mass is a unique protein isolate, the formation of which is described in our Canadian Patent No. 1,028,552 and involves a controlled two-step operation, in which, in the first step, the protein source material is treated with an aqueous food grade salt solution at a temperature of about 15° to about 35°C, a salt concentration of at least 0.2 ionic strength, generally about 0.2 to about 0.8, and a pH of about 5.5 to about 6.5 to cause solubilization (or salting-in) of the protein, usually in about 10 to about 60 minutes, and, in the second step, the aqueous protein solution is diluted to decrease its ionic strength to a value less than about 0.1.

The dilution of the aqueous protein solution, which may have a protein concentration, for example, up to about 10% w/v, causes association of the protein molecules to form highly proteinaceous micelles which settle in the form of an amorphous highly viscous, sticky, gluten-like micellar mass of protein. The protein micellar mass so produced is referred to herein as PMM and is used to form the protein fibres. The wet PMM may be dried to a powder and the drying may be effected in any convenient manner, such as, spray drying, freeze drying or vacuum drum drying.

Improvements in the procedure described in Canadian Patent No. 1,028,552 may be made to increase the yield of the unique protein isolate from the aqueous protein solution, as fully described in our copending Canadian application Serial No. 299,713 filed March 23, 1978.

The protein materials from which the wet PMM is formed may vary widely and include plant proteins, for example, starchy materials, such as, wheat, corn, oats, rye, barley and triticale; starchy legumes, such as, field peas, chickpeas, fababeans, navy beans and pinto beans; and oil seeds, such as, sunflower seeds, peanuts, rapeseed and soy beans; animal proteins, such as, serum proteins; and microbial protein, i.e., single cell proteins. Preferably, the protein source is a plant material owing to the readily-available nature of these materials.

The mild processing operations effected on the source protein to form the PMM ensure that the protein isolate is in a substantially undernatured form, as determined by calorimetry.

PMM, in powder form, may also be used as the binder protein in the products of this invention, although other protein binders, such as, sodium caseinate, may be used in place of all or part thereof.

4

Further, PMM in powder form may be used as the proteinaceous food emulsifier, although powdered egg white also may be used, as a substitute for all or part thereof.

The invention is illustrated by the following Examples:

Example 1

This Example sets forth a procedure for the formation of a snack food product according to the present invention.

A portion of the total quantity of salt to be used was dry mixed in a "Hobart Kitchen-Aid" (Trademark) mixer with dry PMM from a plant protein for 5 minutes at speed 1. Distilled water was warmed to 50°C, colour and maple essence were dissolved therein and one-third of this coloured water was rapidly mixed with the dry mix after setting the blender to speed 2. Mixing was continued for 30 minutes to ensure complete solvation of the PMM.

High stability vegetable oil was warmed to 60°C and bacon and beef flavouring pastes were melted in the heated oil, the oil was cooled to room temperature and liquid pepperoni flavouring was added. The blender was set to speed 4, the oil was very slowly added to the PMM slurry and mixing was continued for 10 minutes to ensure complete emulsification of the oil in the aqueous phase.

Dry protein binder, either dry PMM from a plant protein or dry sodium caseinate, was dry mixed with two powdered beef flavourings for 5 minutes at speed 1. The blender was then set at speed 2 and the remainder of the coloured water was rapidly added with mixing being continued for 30 minutes to ensure complete solvation of the protein binder.

PMM fibres of varying diameters were hand mixed into the binder protein mass using the mixing paddle with care being taken to avoid air entrapment. The PMM emulsion formed as described above then was blended with the PMM fibre and binder with the mixer set at speed 1.

In 10 ml of water there were sequentially dissolved potassium sorbate, monosodium glutamate and sodium nitrite and the solution was blended into the mix at blender speed 1. After mixing for 2 minutes, the remainder of the salt, sugar and the rest of the flavours and spices as a premix were blended into the mix and the blending continued for 5 minutes at speed 2.

The resulting stiff paste having PMM fibres distributed therethrough was transferred to a sausage stuffer, wherein the mix was stuffed into a suitable casing. The stuffed sausage analog was reeled onto a frame, smoked and dried under controlled temperature and relative humidity conditions and cooled slowly to room temperature. After tempering the sausage analog for 24 hours at room temperature and relative humidity, the sausage analog was cut into desired meat snack lengths and placed in a moisture proof package.

In the following Example, the PMM used was formed from field peas. Equivalent results were obtained using PMM's formed from fababeans, soybeans and peanuts.

Example 2

This Example set forth in Table II below the components of a formulation used to form the paste from which a meat snack analog was formed following the procedure of Example I.

TABLE II

| Component | | % by wt. |
|---|---|---|
| A. | Coloured water: | |
| | Water | 33.52 |
| | Colours—Amaranth | 0.0046 |
| | —Sunset yellow | 0.0061 |
| | —Caramel colouring | 0.076 |
| | Maple essence | 0.033 |
| B. | Protein binder mix: | |
| | Pea PMM | 4.58 |
| | Sodium caseinate | 4.58 |
| | Powdered heated beef flavour | 0.218 |
| | Powdered beef flavour | 0.109 |

5

## 0 043 876

TABLE II (contd.)

| Component | | % by wt. |
|---|---|---|
| C. | Protein fibers: | |
| | Fine PMM (0.1 mm) | 9.80 |
| | Medium PMM (0.5 mm) | 19.61 |
| | Coarse PMM (1.0 mm) | 3.27 |
| D. | Oil mixture: | |
| | High stability vegetable oil | 16.41 |
| | Bacon flavour paste | 0.218 |
| | Beef flavour paste | 0.218 |
| | Liquid pepperoni flavour | 0.109 |
| E. | Preservative solution: | |
| | Water | 1.0 |
| | Potassium sorbate | 0.109 |
| | Sodium nitrite | 0.0087 |
| F. | Other ingredients | |
| | Salt | 3.27 |
| | Sugar | 1.63 |
| | Flavour premix | |
| | Powdered pepperoni flav. | 0.109 |
| | Salami flavour | 0.381 |
| | Ground coriander | 0.109 |
| | Onion powder | 0.131 |
| | Granular garlic | 0.065 |
| | Paprika | 0.054 |
| | Smoke flavour | 0.381 |

The moisture, fat and protein contents of the paste and the dried meat snack analog were determined. The results obtained were as follows:

| | Initial paste (% by wt.) | Final product (% by wt.) |
|---|---|---|
| Moisture | 55.8 | 23.3 |
| Fat | 17.0 | 29.5 |
| Total protein | 20.6 | 35.8 |
| — Protein binder | 9.2 | 16.0 |
| — Protein fibres | 11.4 | 19.8 |

6

# 0 043 876

Example 3

This Example sets forth in Table III below the components of a formulation used to form the paste from which the meat snack analog was formed, following the procedure of Example I, except that sodium nitrite was omitted from the preservatives. The product in this Example utilizes only PMM to provide the protein content thereof.

TABLE III

| Component | % by wt. |
|---|---|
| A.  Coloured water: | |
| Water | 32.39 |
| Colours—Amaranth | 0.0046 |
| —Sunset yellow | 0.0061 |
| —Caramel colouring | 0.076 |
| Maple essence | 0.08 |
| Potassium sorbate | 0.10 |
| B.  Protein binder mix: | |
| Pea PMM | 17.65 |
| Sugar | 1.50 |
| Salt | 1.00 |
| High stability vegetable oil (anti-foaming agent) | 1.00 |
| C.  Protein fibres: | |
| Fine PMM (0.1 mm) | 3.0 |
| Medium PMM (0.5 mm) | 14.06 |
| Coarse PMM (1.0 mm) | 8.0 |
| D.  Spices and flavours: | |
| Powdered pepperoni flavour | 0.20 |
| Salami flavour | 0.30 |
| Ground coriander | 0.15 |
| Onion powder | 0.10 |
| Granular garlic | 0.60 |
| E.  Oil mixture: | |
| High stability vegetable oil | 17.92 |
| Liquid pepperoni flavour | 0.25 |
| Bacon flavour paste | 0.16 |

7

**0 043 876**

TABLE III (contd.)

| Component | % by wt. |
|---|---|
| F. Other ingredients: | |
| Powdered smoke flavour | 0.16 |
| Salt | 2.0 |
| Monosodium glutamate | 0.10 |

The moisture, fat and protein contents of the paste and dried meat snack analog were determined and the results obtained were as follows:

| | Initial paste (% by wt.) | Final product (% by wt.) |
|---|---|---|
| Moisture | 48.7 | 21.1 |
| Fat | 19.3 | 29.8 |
| Total protein | 26.4 | 40.7 |
| — Protein binder | 17.7 | 26.6 |
| — Protein fibres | 8.7 | 14.1 |

Example 4

This Example sets forth in Table IV below the components of a formulation used to form the paste from which the meat snack analog was formed, following the procedure of Example I:

TABLE IV

| Component | % by wt. |
|---|---|
| A. Coloured water: | |
| Water | 25.9 |
| Colours—Amaranth | 0.0053 |
| —Sunset yellow | 0.0070 |
| —Caramel colouring | 0.088 |
| Maple essence | 0.10 |
| B. Protein binder mix: | |
| Sodium caseinate | 5.33 |
| Powdered heat beef flavour | 0.254 |
| Powdered beef flavour | 0.127 |
| Coloured water (see A above) | 17.61 |
| C. Protein fibres: | |
| Fine PMM (0.1 mm) | 7.61 |
| Coarse PMM (1.0 mm) | 22.84 |
| Commercial spun protein fibres | 3.81 |

8

TABLE IV (contd.)

| Component | | % by wt. |
|---|---|---|
| D. Emulsifier mix: | | |
| | Pea PMM | 5.33 |
| | Salt | 0.507 |
| | Coloured water (see A above) | 8.49 |
| E. Oil mixture: | | |
| | High stability vegetable oil | 19.1 |
| | Bacon flavour paste | 0.254 |
| | Beef flavour paste | 0.254 |
| | Liquid pepperoni flavour | 0.317 |
| F. Preservative (etc.) solution: | | |
| | Water | 1.27 |
| | Potassium sorbate | 0.127 |
| | Monosodium glutamate | 0.127 |
| | Sodium nitrite | 0.01 |
| G. Other ingredients: | | |
| | Salt | 3.30 |
| | Sugar | 1.90 |
| | Flavour premix— Powd. pepperoni flav. | 0.109 |
| | Salami flav. | 0.381 |
| | Ground coriander | 0.109 |
| | Onion powder | 0.131 |
| | Granular garlic | 0.065 |
| | Paprika | 0.054 |
| | Smoke flavour | 0.381 |

Determination of the moisture, fat and protein contents of the paste and dried meat snack analog were made and the results were as follows:

| | Initial paste (% by wt.) | Final product (% by wt.) |
|---|---|---|
| Moisture | 49.7 | 21.2 |
| Fat | 19.9 | 31.2 |
| Total protein | 22.6 | 35.4 |
| — Protein binder and emulsifier | 10.6 | 16.6 |
| — Protein fibres | 12.0 | 18.8 |

Example 5

This Example set forth in Table V below the components of a formulation used to form the paste from which the meat snack analog was formed, following the procedure of Example I with the modifications that, following the formation of the emulsion, the protein was heat set and the heat set mass was ground prior to blending with the fibrous mass, smoke flavouring was added to the emulsion prior to heat setting to impart a smoky taste to the product, and additional oil was added to produce the desired oil-release and mouth-feel after blending of the ground mass and fibrous mass.

A mixture of PMM and sodium caseinate was used as the protein binder and a mixture of PMM, egg albumen and gelatin was used as the protein emulsifier.

TABLE V

| Component | | % by wt. |
|---|---|---|
| A. | Coloured water: | |
| | Water | 21.91 |
| | Colours—Amaranth | 0.0053 |
| | —Sunset yellow | 0.0070 |
| | —Caramel colouring | 0.027 |
| | Maple essence | 0.154 |
| B. | Protein binder mix: | |
| | Sodium caseinate | 6.92 |
| | Pea PMM | 0.768 |
| | Food grade antifoam agent | 0.005 |
| C. | Protein fibres: | |
| | Medium PMM (0.25 mm) | 30.72 |
| D. | Heat-set emulsion (smoke flavoured) [1] | 20.48 |
| E. | Oil mixture: | |
| | High stability vegetable oil | 5.12 |
| | Liquid smoke flavour I | 0.384 |
| F. | Preservative (etc.) solution: | |
| | Water | 6.14 |
| | Potassium sorbate | 0.102 |
| | Monosodium glutamate | 0.102 |
| | Sodium nitrite | 0.008 |
| | Sodium erythorbate | 0.033 |

**0 043 876**

TABLE V (contd.)

| Component | | % by wt. |
|---|---|---|
| G. | Other ingredients: | |
| | Liquid smoke flavour II | 1.54 |
| | Salt | 2.76 |
| | Dextrose | 1.23 |
| | Spice premix— | |
| | White pepper | 0.102 |
| | Mace | 0.051 |
| | Coriander | 0.092 |
| | Mustard | 0.092 |
| | Paprika | 0.061 |
| | Onion powder | 0.102 |
| | Garlic powder | 0.061 |
| | Glucono delta lactone | 1.02 |

Note:

[1] The constitution of the heat-set emulsion is set forth in the following Table VI.

TABLE VI
Heat-set emulsion (smoke flavour)

| Component | | % by wt. |
|---|---|---|
| A. | Dry protein (etc.) mix: | |
| | Pea PMM | 2.66 |
| | Egg albumen (powder) | 10.63 |
| | Powdered smoke flavour | 0.089 |
| | Sucrose | 3.545 |
| | White pepper | 0.099 |
| | Hydrolyzed vegetable protein | 0.532 |
| | Salt | 1.595 |
| | Gelatin | 2.127 |
| | Whey protein concentrate | 1.140 |
| B. | Aqueous phase: | |
| | Water | 24.81 |
| | Sodium erythorbate | 0.043 |
| | Liquid smoke flavour II | 1.33 |
| C. | Oil mixture: | |
| | High stability vegetable oil | 49.63 |
| | Liquid smoke flavour I | 1.77 |

11

Results of the moisture, fat and protein contents of the paste and dried meat snack analog were as follows:

|  | Initial paste (% by wt.) | Final product (% by wt.) |
|---|---|---|
| Moisture | 54.9 | 26.4 |
| Fat | 16.0 | 26.1 |
| Total protein | 21.8 | 35.5 |
| — Protein binder and emulsifier | 11.0 | 18.0 |
| — Protein fibres | 10.8 | 17.5 |

Example 6

This Example, in Table VII below, sets forth the constituents of a formulation used to form the paste from which the meat snack analog was formed following a modified procedure to that described in Example I. The binder protein used was sodium caseinate while the emulsifier protein was egg albumen and gelatin.

In this Example, the protein in the emulsion was heat set after the formation thereof and the heat set mass was ground prior to blending with the fibrous mass as in the case of Example IV. In this Example, cheese flavouring was used to provide a cheese-flavoured product, and additional oil was added after blending of the ground mass and fibrous mass to produce the desired oil release and mouth feel.

TABLE VII

| Component | | % by wt. |
|---|---|---|
| A. | Coloured water: | |
| | Water | 22.5 |
| | Colours—Amaranth | 0.0033 |
| | —Sunset yellow | 0.0044 |
| | —Caramel colouring | 0.017 |
| | Maple essence | 0.15 |
| B. | Protein binder mix: | |
| | Sodium caseinate | 7.51 |
| | Food grade antifoam agent | 0.005 |
| C. | Protein fibres: | |
| | Medium PMM (0.25 mm) | 30.0 |
| D. | Heat-set cheese-flavoured emulsion [1] | 20.0 |
| E. | Oil mixture: | |
| | High stability vegetable oil | 5.0 |
| | Liquid smoke flavour I | 0.375 |

12

TABLE VII (contd.)

| Component | | % by wt. |
|---|---|---|
| F. | Preservative (etc.) solution: | |
| | Water | 7.5 |
| | Potassium sorbate | 0.10 |
| | Monosodium glutamate | 0.10 |
| | Sodium nitrite | 0.008 |
| | Sodium erythorbate | 0.032 |
| G. | Other ingredients: | |
| | Liquid smoke flavour II | 1.50 |
| | Salt | 2.70 |
| | Dextrose | 1.20 |
| | Spice premix— | |
| | White pepper | 0.10 |
| | Mace | 0.05 |
| | Coriander | 0.09 |
| | Mustard | 0.09 |
| | Paprika | 0.06 |
| | Onion powder | 0.10 |
| | Garlic powder | 0.06 |
| | Glucono delta lactone | 1.00 |

Note:
[1] The constitution of the heat-set emulsion is as set forth in the following Table VIII.

TABLE VIII
Heat-set emulsion (cheese flavour)

| Component | | % by wt. |
|---|---|---|
| A. | Dry protein (etc.) mix: | |
| | Egg albumen powder | 11.29 |
| | Sucrose | 3.01 |
| | Salt | 1.35 |
| | Gelatin | 1.81 |
| | Whey protein concentrate | 0.753 |
| | Natural cheddar cheese flavour | 4.06 |
| | Whey powder | 3.39 |
| | Natural blue cheese flavour | 2.03 |

# 0 043 876

TABLE VIII (contd.)
Heat-set emulsion (cheese flavour)

| Component | | % by wt. |
|---|---|---|
| B. | Aqueous phase: | |
| | Water | 22.58 |
| | Sunset yellow | 0.009 |
| | Sodium erythorbate | 0.050 |
| | Sodium nitrite | 0.009 |
| C. | Oil mixture: | |
| | High stability vegetable oil | 48.91 |
| | Liquid smoke flavour I | 0.753 |

The moisture, fat and protein contents of the paste and meat snack analog product were determined, the results being as follows:

| | Initial paste (% by wt.) | Final product (% by wt.) |
|---|---|---|
| Moisture | 55.5 | 24.8 |
| Fat | 15.3 | 25.9 |
| Total protein | 21.4 | 36.2 |
| — Protein binder and emulsifier | 10.9 | 18.5 |
| — Protein fibres | 10.5 | 17.7 |

Example 7

In this Example, the procedure of Example 1 was again repeated except that in this case textured vegetable protein (TVP) granules were added to the emulsion. Sodium caseinate was used as the binder protein and PMM was used as the emulsifier protein. The constituents used are set forth in the following Table IX:

TABLE IX

| Component | | % by wt. |
|---|---|---|
| A. | Coloured water for binder: | |
| | Water | 18.60 |
| | Colours—Amaranth | 0.0053 |
| | —Sunset yellow | 0.0070 |
| | —Caramel colouring | 0.088 |
| | Maple essence | 0.081 |
| | Liquid smoke flavour II | 0.404 |
| B. | Protein dry mix for binder: | |
| | Sodium caseinate | 6.072 |
| | Antifoam agent | 0.016 |

14

**0 043 876**

TABLE IX (contd.)

| Component | | % by wt. |
|---|---|---|
| C. | Protein fibres: | |
| | Fine PMM (0.1 mm) | 16.17 |
| | Coarse PMM (1.0 mm) | 16.17 |
| D. | Protein dry mix for emulsion: | |
| | Pea PMM | 0.251 |
| | Salt | 0.509 |
| | Emulsion stabilizer | 0.251 |
| E. | Aqueous phase for emulsion: | |
| | Water | 12.13 |
| F. | Oil mixture for emulsion: | |
| | Hydrogenated vegetable oil | 5.053 |
| | High stability vegetable oil | 7.074 |
| | Liquid smoke flavour I | 0.404 |
| G. | Textured vegetable protein (granules) | 6.468 |
| | (2.0 mm diameter) | |
| H. | Preservative (etc.) solution: | |
| | Water | 6.468 |
| | Potassium sorbate | 0.081 |
| | Monosodium glutamate | 0.081 |
| | Sodium nitrite | 0.006 |
| I. | Other ingredients: | |
| | Salt | 1.940 |
| | Sugar | 1.213 |
| | Spices— | |
| | White pepper | 0.10 |
| | Mace | 0.05 |
| | Coriander | 0.09 |
| | Mustard | 0.09 |
| | Paprika | 0.06 |
| | Onion powder | 0.10 |
| | Garlic powder | 0.06 |

15

## 0 043 876

The moisture, fat and protein contents of the paste and meat snack analog product were determined, the results being as follows:

|  | Initial paste (% by wt.) | Final product (% by wt.) |
|---|---|---|
| Moisture | 58.7 | 21.4 |
| Fat | 12.5 | 23.8 |
| Total protein | 20.9 | 39.7 |
| — Protein binder and emulsifier | 6.3 | 12.0 |
| — Protein fibres | 14.6 | 27.7 |

Example 8

The procedure of Example 1 was repeated using the formulation of Example 5 except that varying proportions of PMM fibre were used, based on the overall composition, and in each case the hardness of the product, as determined by a texturometer was measured and the values compared with that of a commercial meat snack product. The results are reproduced in the following Table X:

TABLE X

| Sample | % PMM fibres (wt.) | Hardness texturometer units [1] | Cohesiveness units [2] |
|---|---|---|---|
| 1 | 10 | 33.8 | 0.74 |
| 2 | 20 | 36.3 | 0.79 |
| 3 | 30 | 40.6 | 0.78 |
| 4 | 40 | 41.1 | 0.87 |
| 5 | 50 | 47.8 | 0.82 |
| Commercial meat snack product | — | 47.5 | 0.80 |

$$^{[1]} \text{Texturometer units} = \frac{\text{1st peak hgt.}}{\text{voltage (v)}} \times \frac{\text{mV recorder scale}}{2}$$

$$^{[2]} \text{Cohesiveness units} = \frac{\text{2nd peak area}}{\text{1st peak area}}$$

It will be seen from the results of the above Table X that the meat snack analog product made at 50 wt. % PMM fibres had comparable hardness and cohesiveness values to the commercial meat snack product.

Taste tests by a panel of tasters also revealed comparable taste characteristics, such as, oil-release and mouthfeel, texture and chewiness and flavour, between the meat snack analog product made at 50 wt. % PMM and the commercial meat snack product.

It will be apparent from the above description and Examples that the present invention provides a meat snack analog product utilizing proteins from non-meat sources. Modifications are possible within the scope of the present invention.

## Claims

1. A method for the formation of a proteinaceous snack product by stuffing a substantially uniform mix of protein, lipid material, water, spices, seasonings and flavourings into a suitable casing, drying the stuffed material to a desired moisture content sufficiently low to inhibit microbial growth at ambient temperature, and packaging the dried product in discrete lengths in moisture-proof packages,

16

## 0 043 876

characterized by forming protein, lipid material and water into said substantially uniform mix by the steps of:

(a) emulsifying at least one food grade lipid material in water using at least one proteinaceous non-meat food emulsifier to form an emulsion,

(b) dispersing non-meat protein fibers derived from a protein micellar mass and constituting the sole proteinaceous texturing agent in an aqueous dispersion and/or solution of at least one non-meat proteinaceous binder to form a dispersion, and

(c) mixing the emulsion formed in step (a) with the dispersion formed in step (b) to form said substantially uniform mix,

the ingredients being used in proportions sufficient to provide a snack food product having the composition:

| | |
|---|---|
| Non-meat proteins | |
| — texturing protein | 10 to 70% by wt. |
| — binding and emulsifying protein | 5 to 65% by wt. |
| Water | 5 to 35% by wt. |
| Lipid material | 10 to 60% by wt. |
| Suitable spices, colouring agents and flavourings | up to 15% by wt. |

2. A method according to claim 1 wherein said proteinaceous texturing agent is provided in said mixture by dispersing said proteinaceous texturing agent in said emulsion prior to step (b).

3. A method according to either of claims 1 or 2 wherein said proteinaceous texturing agent comprises or includes protein fibres and said proteinaceous texturing agent is additionally provided in said mixture by dispersing said protein fibres in said aqueous dispersion and/or solution of at least one non-meat proteinaceous binder prior to mixing thereof with said emulsion.

4. A method according to either of claims 2 or 3 wherein sufficient granular textured vegetable protein is added to said emulsion that rehydration thereof forms a semi-solid meat fat-like product and said fat-like product is granulated prior to mixing step (b).

5. A method according to any one of claims 1 to 4 wherein at least part of said lipid emulsion is heat set to a semi-solid mass and granulated prior to said mixing step (b), and any of said lipid emulsion not heat set is mixed directly in step (b).

6. A method according to claim 5 wherein all said lipid emulsion is heat set and additional lipid material is added to the mixture resulting from step (b).

7. A method according to any one of claims 1 to 6 wherein said lipid material is a food grade liquid vegetable oil.

8. A method of any of claims 1 to 7 wherein said product also contains:

| | |
|---|---|
| Antioxidant | up to 1% by wt. |
| Salt | 0 to 10% by wt. |
| Sugars | 0 to 35% by wt. |
| Preservatives | |
| — potassium sorbate | 0 to 0.2% by wt. |
| — sodium nitrate | 0 to 0.02% by wt. |
| Antifoam agent | 0 to 0.5% by wt. |
| Acidifying agent and/or bacterial culture | 0 to 5% by wt. |

9. A method according to claim 1 characterized by the steps of:

(a) rapidly agitating at least one proteinaceous non-meat food emulsifier in water and mixing the same until the emulsifier protein is completely solvated,

(b) emulsifying at least one food grade vegetable oil in the protein solution,

17

(c) rapidly agitating at least one non-meat proteinaceous binder in water and mixing the same until the binder protein is completely solvated,

(d) dispersing protein fibres in the resulting protein solution,

(e) blending the emulsified oil with the fibre dispersion,

(f) adding a preservative solution to the blend, and

(g) mixing and incorporating salt, sugars and the required spices and flavourings into the blend.

10. A method according to claim 9, wherein the ingredients are used in proportions sufficient to provide a snack food product having the composition:

| Non-meat proteins | |
|---|---|
| — texturing proteins | about 30 to about 50 wt. % |
| — binding and emulsifying protein | about 10 to about 30 wt. % |
| Water | about 15 to about 25 wt. % |
| Spices, colours and flavourings | about 5 to about 10 wt. % |
| Lipid material | about 25 to about 35 wt. % |
| Salt | about 5 to about 6 wt. % |
| Sugar | about 2 to about 4 wt. % |
| Antioxidant | about 0.8 wt. % |
| Preservatives— | |
| potassium sorbate | about 0.1 wt. % |
| sodium nitrite | about 0.02 wt. % |
| antifoam agent | about 0.01 wt. % |

in which the constituents must always add up to 100%.

11. A method according to claim 10 characterized in that sodium nitrite is absent from said preservatives.

12. A method according to any one of claims 3 to 11 characterized in that said protein fibres are formed by injecting a protein micellar mass into hot water through a plurality of openings to form protein fibres by coagulation.

13. A method according to any one of claims 1 to 12 characterized in that said proteinaceous emulsifier comprises a protein micellar mass.

14. A method according to any one of claims 1 to 13 characterized in that said proteinaceous binder comprises a protein micellar mass.

15. A method of any one of claims 13, 14 or 15 characterized in that said protein micellar mass is formed by:

(a) extracting protein from proteinaceous material with an aqueous food grade salt solution at a temperature of about 15° to about 35°C, a salt concentration of at least 0.2 ionic strength and a pH of about 5.5 to about 6.5, and

(b) decreasing the ionic strength of the protein solution to a value less than about 0.1 to precipitate and settle said protein micellar mass.

16. A method according to claim 15 characterized in that said food grade salt solution has an ionic strength of 0.2 to 0.8 and said extraction is effected for 10 to 60 minutes.

17. A method according to claim 15 characterized in that said protein is at least one of plant proteins, animal proteins and microbial proteins.

18. A method according to any preceding claim characterized in that said proteins are at least one of starchy cereals, starchy legumes and oil seeds.

**Patentansprüche**

1. Verfahren zum Herstellen von eiweißhaltigen Snacks, in dem ein im wesentlichen einheitliches Gemisch aus Eiweiß, Lipidsubstanz, Wasser, Gewürzen, Würz- und Geschmackstoffen in eine geeignete

18

Hülle gefüllt und in dieser auf eine gewünschte Feuchte getrocknet wird, die so niedrig ist, daß ein Mikrobenwachstum bei Umgebungstemperatur verhindert wird, und das getrocknete Produkt in diskreten Längen in feuchtigkeitsdichte Hüllen verpackt wird, dadurch gekennzeichnet, daß zum Herstellen des im wesentlichen einheitlichen Gemisches aus Eiweiß, Lipidsubstanz und Wasser folgende Schritte durchgeführt werden:

(a) Zum Herstellen einer Emulsion wird mindestens eine genießbare Lipidsubstanz unter Verwendung mindestens eines genießbaren nichtfleischlichen eiweißhaltigen Emulgators in Wasser emulgiert;

(b) zum Herstellen einer Dispersion werden nichtfleischliche Eiweißfasern, die von einer Proteinmizellenmasse stammen und die einzige texturgebende eiweißhaltige Substanz bilden, in einer wässerigen Dispersion und/oder Lösung mindestens eines nichtfleischlichen, eiweißhaltigen Bindemittels dispergiert;

(c) zum Herstellen des im wesentlichen einheitlichen Gemisches wird die im Schritt (a) hergestellte Emulsion mit der im Schritt (b) hergestellten Dispersion vermischt,

wobei die Bestandteile in solchen Anteilen verwendet werden, daß die Snacks folgende Zusammensetzung haben:

Nichtfleischliches Eiweiß

| | |
|---|---|
| — Texturgebendes Eiweiß | 10 bis 70 Gew.% |
| — Bindemittel und Emulgatoreiweiß | 5 bis 65 Gew.% |
| Wasser | 5 bis 35 Gew.% |
| Lipidsubstanz | 10 bis 60 Gew.% |
| Geeignete Gewürze, Farb- und Geschmackstoffe | bis zu 15 Gew.% |

2. Verfahren nach Anspruch 1, dadurch gekennzeichnet, daß zum Einführen der texturgebenden eiweißhaltigen Substanz in das Gemisch die texturgebende eiweißhaltige Substanz vor dem Schritt (b) in der Emulsion dispergiert wird.

3. Verfahren nach Anspruch 1 oder 2, dadurch gekennzeichnet, daß die texturgebende eiweißhaltige Substanz ganz oder teilweise aus Eiweißfasern besteht und daß die texturgebende eiweißhaltige Substanz zusätzlich dadurch in das Gemisch eingeführt wird, daß die Eiweißfasern in der wässerigen Dispersion und/oder Lösung mindestens eines nichtfleischlichen eiweißhaltigen Bindemittels dispergiert wird, bevor dieses mit der Emulsion vermischt wird.

4. Verfahren nach Anspruch 2 oder 3, dadurch gekennzeichnet, daß der Emulsion so viel körniges texturiertes Pflanzeneiweiß zugesetzt wird, daß durch die Rehydratation der Emulsion ein halbfestes fleischfettähnliches Produkt erhalten wird, und daß dieses fettähnliche Produkt vor dem Mischschritt (b) granuliert wird.

5. Verfahren nach einem der Ansprüche 1 bis 4, dadurch gekennzeichnet, daß vor dem Mischschritt (b) mindestens ein Teil der Lipidemulsion in der Wärme unter Bildung einer halbfesten Masse zum Erstarren gebracht und granuliert wird und daß ein gegebenenfalls nicht in der Wärme zum Erstarren gebrachter Teil der Lipidemulsion direkt im Schritt (b) beigemischt wird.

6. Verfahren nach Anspruch 5, dadurch gekennzeichnet, daß die gesamte Lipidemulsion vollständig in der Wärme zum Erstarren gebracht wird und daß dem im Schritt (b) erhaltenen Gemisch zusätzliche Lipidsubstanz zugesetzt wird.

7. Verfahren nach einem der Ansprüche 1 bis 6, dadurch gekennzeichnet, daß die Lipidsubstanz ein lebensmittelechtes flüssiges Pflanzenöl ist.

8. Verfahren nach einem der Ansprüche 1 bis 7, dadurch gekennzeichnet, daß die Snacks ferner enthalten:

| | |
|---|---|
| Antioxidans | bis 1 Gew.% |
| Salz | 0 bis 10 Gew.% |
| Zucker | 0 bis 35 Gew.% |
| Konservierungsstoffe | |
| — Kaliumsorbat | 0 bis 0,2 Gew.% |
| — Natriumnitrit | 0 bis 0,02 Gew.% |
| Schaumverhütungsmittel und/oder Bakterienkultur | 0 bis 5 Gew.% |

9. Verfahren nach Anspruch 1, gekennzeichnet durch folgende Schritte:

(a) Mindestens ein genießbarer nichtfleischlicher eiweißhaltigen Emulgator wird in Wasser mit hoher Geschwindigkeit gerührt und mit ihm gemischt, bis das Emulgatoreiweiß vollständig solvatiert ist,

(b) mindestens ein genießbares Pflanzenöl wird in der Eiweißlösung emulgiert,

(c) mindestens ein nichtfleischliches eiweißhaltiges Bindemittel wird in Wasser mit hoher Geschwindigkeit gerührt und mit ihm gemischt, bis das Bindemitteleiweiß vollständig solvatiert ist,

(d) in der so erhaltenen Eiweißlösung werden Eiweißfasern dispergiert,

(e) das emulgierte Öl wird mit der Faserdispersion vermischt,

(f) dem Gemisch wird eine Lösung von Konservierungsstoffen zugesetzt, und

(g) in das Gemisch werden Salz, Zucker und die erforderlichen Gewürze und Geschmacksstoffe eingeführt und ihm beigemischt.

10. Verfahren nach Anspruch 9, dadurch gekennzeichnet, daß die Bestandteile in solchen Anteilen verwendet werden, daß Snacks folgender Zusammensetzung erhalten werden:

Nichtfleischliches Eiweiß

| | |
|---|---|
| — Texturgebendes Eiweiß | etwa 30 bis etwa 50 Gew.% |
| — Bindemittel- und Emulgatoreiweiß | etwa 10 bis etwa 30 Gew.% |
| Wasser | etwa 15 bis etwa 25 Gew.% |
| Gewürze, Farb- und Geschmacksstoffe | etwa 5 bis etwa 25 Gew.% |
| Lipidsubstanz | etwa 25 bis etwa 35 Gew.% |
| Salz | etwa 5 bis etwa 6 Gew.% |
| Zucker | etwa 2 bis etwa 4 Gew.% |
| Antioxidans | etwa 0,8 Gew.% |
| Konservierungsstoffe | |
| — Kaliumsorbat | etwa 0,1 Gew.% |
| — Natriumnitrit | etwa 0,02 Gew.% |
| Schaumverhütungsmittel | etwa 0,01 Gew.% |

wobei die Bestandteile zusammen 100% ergeben.

11. Verfahren nach Anspruch 10, dadurch gekennzeichnet, daß zu den Konservierungsstoffen kein Natriumnitrit gehört.

12. Verfahren nach einem der Ansprüche 3 bis 11, dadurch gekennzeichnet, daß zum Herstellen der Eiweißfasern eine Eiweißmizellenmasse durch mehrere Öffnungen hindurch in heißes Wasser eingedüst und dadurch zu Eiweißfasern ausgeflockt wird.

13. Verfahren nach einem der Ansprüche 1 bis 12, dadurch gekennzeichnet, daß der eiweißhaltige Emulgator mindestens teilweise aus einer Eiweißmizellenmasse besteht.

14. Verfahren nach einem der Ansprüche 1 bis 13, dadurch gekennzeichnet, daß das eiweißhaltige Bindemittel mindestens teilweise aus einer Eiweißmizellenmasse besteht.

15. Verfahren nach einem der Ansprüche 12, 13 oder 14 dadurch gekennzeichnet, daß die Eiweißzellmasse wie folgt hergestellt wird:

(a) Aus eiweißhaltigem Gut wird Eiweiß mit einer wässerigen Lösung eines genießbaren Salzes bei einer Temperatur von etwa 15 bis etwa 35°C, einer Ionenstärke von mindestens 0,2 entsprechenden Salzkonzentration und einem pH-Wert von etwa 5,5 bis etwa 6,5 extrahiert und

(b) die Ionenstärke der Eiweißlösung wird unter etwa 0,1 herabgesetzt, so daß die Eiweißmizellenmasse ausgefällt wird und sich absetzt.

16. Verfahren nach Anspruch 15, dadurch gekennzeichnet, daß die Lösung des genießbaren Salzes eine Ionenstärke von 0,2 bis 0,8 hat und die Extraktion für 10 bis 60 Minuten durchgeführt wird.

17. Verfahren nach Anspruch 16, dadurch gekennzeichnet, daß das verwendete Eiweiß aus Pflanzeneiweiß, tierischem Eiweiß und/oder Mikrobeneiweiß besteht.

18. Verfahren nach einem der vorhergehenden Ansprüche, dadurch gekennzeichnet, daß das verwendete Eiweiß von stärkehaltigen Getreideprodukten, stärkehaltigen Hülsenfrüchten und/oder Ölsaaten stammt.

## Revendications

1. Procédé de préparation d'un en-cas protéique par bourrage d'un mélange essentiellement uniforme de protéine, de matière lipidique, d'eau, d'épices, d'assaisonnements et d'arômes dans un boyau approprié, séchage de la matière bourrée jusqu'à une teneur d'humidité désirée, suffisamment basse pour empêcher une croissance microbienne à la température ambiante, et empaquetage du produit séché en longueurs séparées dans des emballages à l'épreuve de l'humidité, caractérisé par la transformation de la protéine, de la matière lipidique et de l'eau en le mélange essentiellement uniforme susdit par les opérations suivantes:

(a) émulsionnement d'au moins une matière lipidique de qualité alimentaire dans de l'eau en utilisant au moins un émulsionnant alimentaire non carné protéique pour former une émulsion;

(b) dispersion de fibres protéiques non carnées, dérivant d'une masse micellaire protéique et constituant le seul agent de texturation protéique, dans une dispersion et/ou solution aqueuse d'au moins un liant protéique non carné pour former une dispersion; et

(c) mélange de l'émulsion formée au cours de l'opération (a) avec la dispersion formée au cours de l'opération (b) pour produire le mélange essentiellement uniforme susdit,

les ingrédients étant utilisés en des proportions suffisantes pour former un produit alimentaire du type en-cas ayant la composition suivante:

Protéines non carnées

| | |
|---|---|
| — protéine de texturation | 10 à 70% en poids |
| — protéines de liaison et d'émulsionnement | 5 à 65% en poids |
| Eau | 5 à 35% en poids |
| Matière lipidique | 10 à 60% en poids |
| Epices, colorants et assaisonnements appropriés | jusqu'à 15% en poids |

2. Procédé suivant la revendication 1, caractérisé en ce que l'agent de texturation protéique est amené dans le mélange susdit par dispersion de cet agent dans l'émulsion avant l'opération (b).

3. Procédé suivant l'une quelconque des revendications 1 et 2, caractérisé en ce que l'agent de texturation protéique est constitué par ou comprend des fibres protéiques et en ce que cet agent de texturation protéique est en outre apporté au mélange susdit par dispersion des fibres protéiques dans la dispersion et/ou solution aqueuse susdite d'au moins un liant protéique non carné avant son mélange avec l'émulsion.

4. Procédé suivant l'une ou l'autre des revendications 2 et 3, caractérisé en ce qu'on ajoute une quantité suffisante de protéine végétale texturée granulaire à l'émulsion susdite pour que sa réhydratation forme un produit ressemblant à de la graisse de viande, semi-solide, et que ce produit ressemblant à de la graisse soit granulé avant la phase de mélange (b).

5. Procédé suivant l'une quelconque des revendications 1 à 4, caractérisé en ce qu'au moins une partie de l'émulsion lipidique susdite est amenée à faire prise à chaud en une masse semi-solide et est granulée avant la phase de mélange (b), et en ce que toute quantité quelconque de l'émulsion lipidique n'ayant pas fait prise à chaud est mélangée directement au cours de la phase (b).

6. Procédé suivant la revendication 5, caractérisé en ce que la totalité de l'émulsion lipidique susdite est amenée à faire prise à chaud et en ce qu'on ajoute une quantité supplémentaire de matière lipidique au mélange résultant de la phase (b).

7. Procédé suivant l'une quelconque des revendications 1 à 6, caractérisé en ce que la matière lipidique est constituée par une huile végétale liquide de qualité alimentaire.

8. Procédé suivant l'une quelconque des revendications 1 à 7, caractérisé en ce que le produit contient en outre:

| | |
|---|---|
| antioxydant | jusqu'à 1% en poids |
| sel | 0 à 10% en poids |
| Sucres | 0 à 35% en poids |

## 0 043 876

Agents de conservation

| | |
|---|---|
| — sorbate de potassium | 0 à 0,2% en poids |
| — nitrate de sodium | 0 à 0,2% en poids |
| Agent antimousse | 0 à 0,5% en poids |
| Agent acidifiant et/ou culture de bactéries | 0 à 5% en poids |

9. Procédé suivant la revendication 1, caractérisé en ce qu'il comprend les opérations suivantes:

(a) agitation rapide d'au moins un émulsionnant alimentaire non carné protéique dans de l'eau et son mélange jusqu'à ce que la protéine émulsionnante soit totalement solvatée;
(b) émulsionnement d'au moins une huile végétale de qualité alimentaire dans la solution protéique;
(c) agitation rapide d'au moins un liant protéique non carné dans de l'eau et son mélange jusqu'à ce que la protéine de liaison soit totalement solvatée;
(d) dispersion de fibres protéiques dans la solution protéique résultante;
(e) mélange de l'huile émulsionnée avec la dispersion de fibres;
(f) addition d'une solution de conservation au mélange; et
(g) mélange et incorporation de sel, de sucres et des épices et assaisonnements nécessaires dans le mélange.

10. Procédé suivant la revendication 9, caractérisé en ce que les ingrédients sont utilisés en des proportions suffisantes pour donner un produit alimentaire formant en-cas répondant à la composition:

protéines non carnées

| | |
|---|---|
| — protéines de texturation | environ 30 à environ 50% en poids |
| — protéines de liaison et d'émulsionnement | environ 10 à environ 30% en poids |
| Eau | environ 15 à environ 25% en poids |
| Epices, colorants et arômes | environ 5 à environ 10% en poids |
| Matière lipidique | environ 25 à environ 35% en poids |
| Sel | environ 5 à environ 6% en poids |
| Sucre | environ 2 à environ 4% en poids |
| Antioxydant | environ 0,8% en poids |

Agents de conservation

| | |
|---|---|
| — sorbate de potassium | environ 0,1% en poids |
| — nitrite de sodium | environ 0,02% en poids |
| — agent antimousse | environ 0,01% en poids |

les constituants devant être ajoutés pour former 100%.

11. Procédé suivant la revendication 10, caractérisé en ce qu'il n'y a pas de nitrite de sodium dans les agents de conservation.

12. Procédé suivant l'une quelconque des revendications 3 à 11, caractérisé en ce que les fibres protéiques sont formées par injection d'une masse micellaire protéique dans de l'eau chaude à travers une série d'ouvertures pour former des fibres protéiques par coagulation.

13. Procédé suivant l'une quelconque des revendications 1 à 12, caractérisé en ce que l'émulsionnant protéique comprend une masse micellaire protéique.

14. Procédé suivant l'une quelconque des revendications 1 à 13, caractérisé en ce que le liant protéique comprend une masse micellaire protéique.

15. Procédé suivant l'une quelconque des revendications 13, 14 ou 15, caractérisé en ce que la masse micellaire protéique est formée par:

22

(a) extraction de protéine d'une matière protéique avec une solution de sel aqueuse de qualité alimentaire, à une température d'environ 15 à environ 35°C, à une concentration de sel d'une force ionique d'au moins 0,2 et à un pH d'environ 5,5 à environ 6,5, et

(b) diminution de la force ionique de la solution protéique jusqu'à une valeur inférieure à environ 0,1 pour provoquer la précipitation et le dépôt de cette masse micellaire protéique.

16. Procédé suivant la revendication 15, caractérisé en ce que la solution de sel de qualité alimentaire a une force ionique de 0,2 à 0,8 et en ce que l'extraction susdite est réalisée pendant 10 à 60 minutes.

17. Procédé suivant la revendication 15, caractérisé en ce que la protéine est constituée par au moins l'une des protéines végétales, des protéines animales et des protéines microbiennes.

18. Procédé suivant l'une quelconque des revendications précédentes, caractérisé en ce que les protéines sont constituées par au moins l'un des produits formés par les céréales amylacées, les légumineuses amylacées et les graines oléagineuses.